# EUROPEAN PATENT SPECIFICATION

(11) **EP 3 609 059 B1**
(45) Date of publication and mention of the grant of the patent: **04.11.2020**
(21) Application number: 18188273.9
(22) Date of filing: 09.08.2018
(51) Int. Cl.: H02K 11/38, H02K 9/19, H02K 9/22

(54) **CONTROLLING SYSTEM OF ELECTRIC SCOOTER**
STEUERUNGSSYSTEM EINES ELEKTROROLLERS
SYSTÈME DE COMMANDE DE SCOOTER ÉLECTRIQUE

(43) Date of publication of application: 12.02.2020
(73) Proprietor: Fukuta Electric & Machinery Co., Ltd., 429 Taichung City (TW)
(72) Inventor: CHANG, CHIN FENG, 428 Taichung City (TW); KE, HUNG CHUN, 509 Changhua County (TW)
(74) Representative: Cabinet Chaillot

(56) References cited:
- DE-A1-102014 220 835
- JP-A- 2014 093 854
- US-A1- 2003 173 843

## Description

### BACKGROUND OF THE INVENTION

### 1. Technical Field

The present invention relates to an electric scooter, and more particularly to a controlling system of an electric scooter.

### 2. Description of Related Art

A conventional electric scooter is driven by an electric motor, and a gearbox is provided to transmit the power of the motor to the wheels. Typically, a controlling system is provided to control the running of the electric motor.

In a conventional electric scooter, the electric motor is mounted in a case, and the controlling system has a circuit board mounted in a box. The case and the box are two independent elements, so that a plurality of wires are provided to electrically connect the circuit board in the box to the electric motor in the case.

Since the case and the box are two independent elements, they need a large space in the electric scooter to receive them. Some improved electric scooters provide the circuit board in the case. However, the case has to receive the rectangular circuit board therein, so it does not reduce the space as much as expected.
JP 2014 093854 A and DE 10 2014 220835 A1 disclose a controlling system of an electric scooter according to the preamble of claim 1.
US 2003/173843 A1 discloses a controlling system of an electric scooter according to the preamble of claim 1 with the feature according to which the recess portion of the circuit board is located at an edge thereof.

### BRIEF SUMMARY OF THE INVENTION

In view of the above, the primary objective of the present invention is to provide a controlling system of an electric scooter, which takes a space smaller than the prior art.

A secondary objective of the present invention is to provide a controlling system of an electric scooter, which integrates a circuit board in a case beside a driving axle of an electric motor to reduce the size of the case.

A third objective of the present invention is to provide a lubrication system of a power assembly of an electric scooter, which provides a heat dissipating room beside the circuit board to enhance the effect of heat dissipation.

In order to achieve the objective of the present invention, a controlling system of an electric scooter as defined in claim 1 is provided and it includes a case having a mounting room therein, and a circuit board received in the mounting room of the case and having a recess portion at an edge thereof. A driving shaft of an electric motor has at least a section in the mounting room of the case and received in the recess portion of the circuit board, and the circuit board is electrically connected to the electric motor.

Therefore, the circuit board is closer to the driving shaft because of the recess portion to reduce a size of the case.

In an embodiment, the case further has a heat dissipating room on an opposite side of the mounting room to dissipate a heat of the circuit board.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of a preferred embodiment of the present invention;
FIG. 2 is an exploded view of the preferred embodiment of the present invention, showing the electric motor and the driven gear;
FIG. 3 is an exploded view of the preferred embodiment of the present invention, showing the circuit board;
FIG. 4 is a bottom view of the preferred embodiment of the present invention; and
FIG. 5 is a partial sectional view of the preferred embodiment of the present invention, showing the circuit board and the driving shaft.

### DETAILED DESCRIPTION OF THE INVENTION

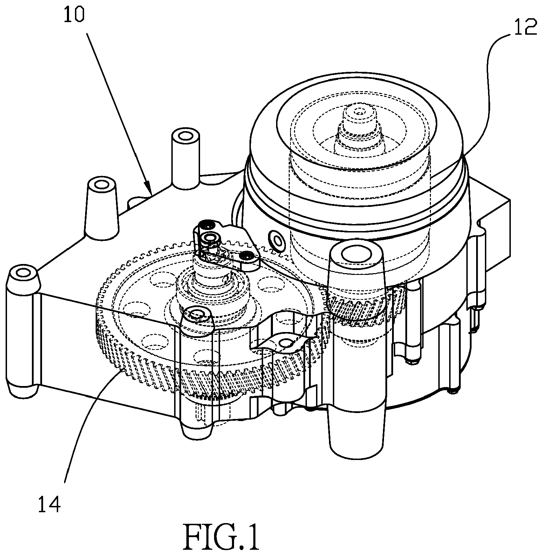

As shown in FIG. 1, a power assembly of an electric scooter includes a case 10, in which an electric motor 12 and a driven gear 14 are received. A controlling system of the preferred embodiment of the present invention is connected to the case 10 and electrically connected to the electric motor 12 to control a running of the electric motor 12.

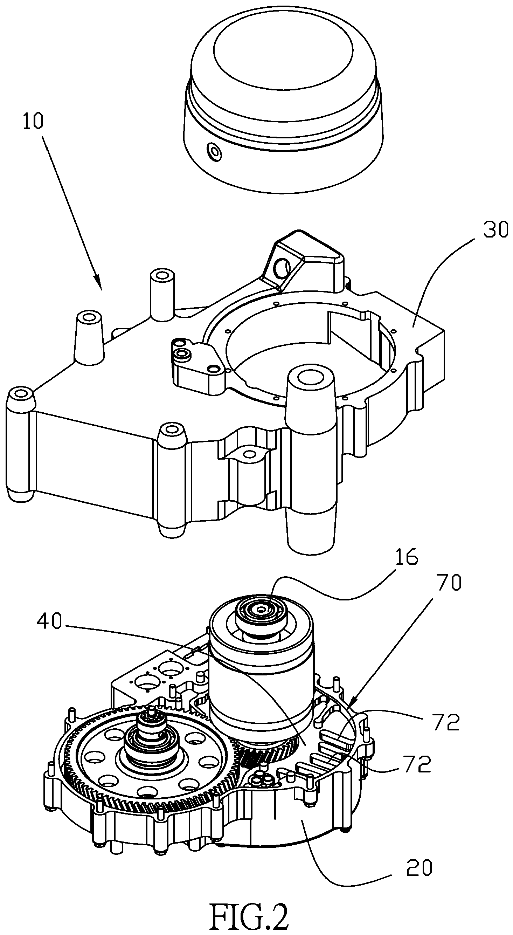

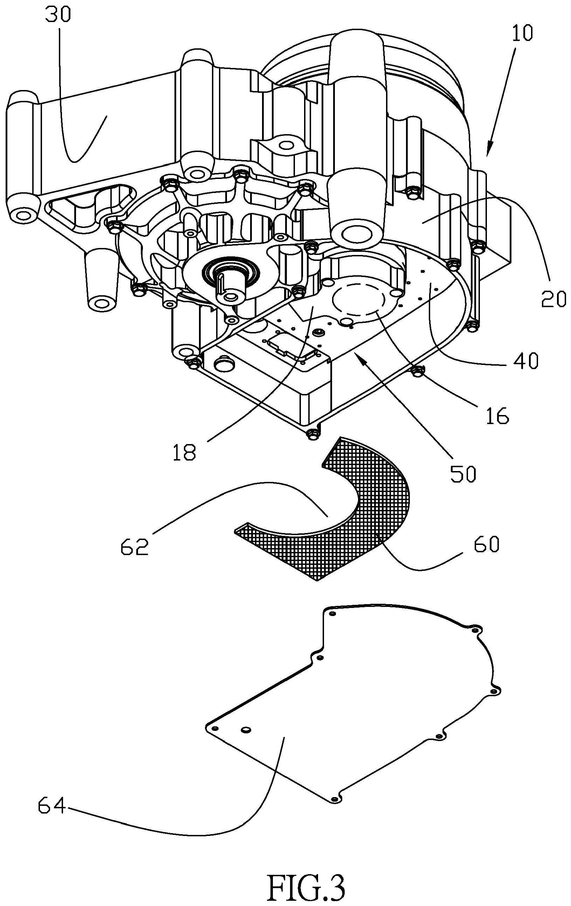

As shown in FIG. 2 and FIG. 3, the case 10 has a base 20 and a connecting base 30 connected to the base 20. The base 20 has a separating member 40 to divide a space into a heat dissipating room 70 and a mounting room 50. The electric motor 12 and the driven gear 14 are mounted in the heat dissipating room 70, and the electric motor has a driving shaft 16 passing through the separating layer 40 and is received in the mounting room 50. A cover 18 is connected to the separating layer 40 to cover the driving shaft in the mounting room 50.

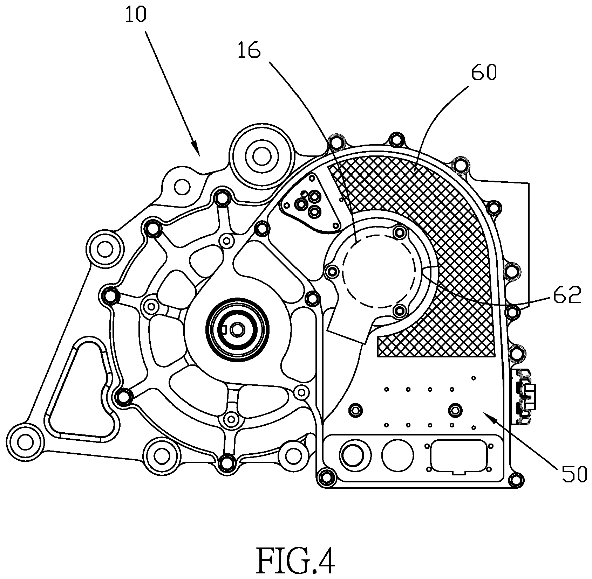

As shown in FIG. 3 and FIG. 4, the controlling system includes a circuit board 60, which has a recess portion 62 at an edge thereof. The circuit board 60 is received in the mounting room 50, and the driving shaft 16 of the electric motor 12 in the mounting room 50 is received in the recess portion 62. The circuit board 60 is electrically connected to the electric motor 12. A lid 64 is connected to the base 20 to seal the mounting room 50, and cover the driving shaft 16 and the circuit board 60.

The circuit board 60 is closer to the driving shaft 16 because of the recess portion 62. It reduces the space for the driving shaft 16 and the circuit board 60 to decrease a size of the case 10. Furthermore, the heat dissipating room 70 is filled with a lubricant, which is helpful to heat dissipation.

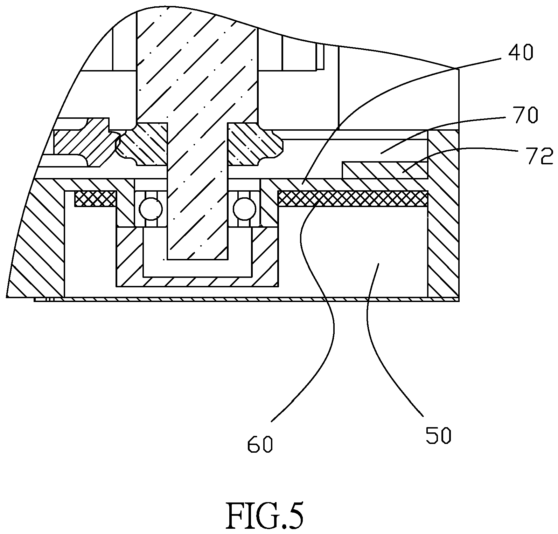

As shown in FIG. 5, the circuit board 60 is received in the mounting room 50 and attached to the separating layer 60. Heat of the circuit board 60 is transferred to the separating layer 60, and dissipated to the heat dissipating room 70 at an opposite side of the separating layer 60.

As shown in FIG. 2 and FIG. 5, the base 20 is provided with a plurality of ribs 72 in the heat dissipating room 70, which may eliminate bubbles in lubricant. In addition, the ribs 72 is provided on the separating layer 40, which increases a surface area to help the effect of heat dissipation.

In conclusion, the controlling system includes the circuit board and the heat dissipating structure. A specified shape of the circuit make the circuit board closer to the driving shaft of the electric motor to reduce a size of the case. The circuit board is attached to the separating layer to transfer the heat of the circuit board via the separating layer and dissipate in the heat dissipating room. Furthermore, the heat dissipating room is filled with lubricant for lubricity of the electric motor and the driven gear, and the lubricant is helpful to the heat dissipation without further devices.

It must be pointed out that the embodiment described above is only a preferred embodiment of the present invention. The scope of the invention is defined by the appended claims.

## Claims

1. A controlling system for an electric scooter, comprising:
a case (10) having a mounting room (50) therein; and
a circuit board (60) received in the mounting room (50) of the case (10), and having a recess portion (62);
wherein a driving shaft (16) of an electric motor (12) has at least a section in the mounting room (50) of the case (10) and is received in the recess portion (62) of the circuit board (60), and the circuit board (60) is electrically connected to the electric motor (12);
wherein the case (10) has a separating layer (40) to divide a space in the case (10) into the mounting room (50) and a heat dissipating room (70);
wherein the circuit board is attached to the separating layer (40) to transfer the heat of the circuit board (60) to the heat dissipating room (70) via the separating layer (40) ;
the controlling system being **characterised in that** the recess portion (62) of the circuit board (60) is located at an edge thereof,
the controlling system being further **characterised in that**:
the heat dissipating room (70) is filled with a lubricant; and
the separating layer (40) is provided with a plurality of ribs (72) on a side inside the heat dissipating room (70).

2. The controlling system of claim 1, wherein the case (10) has a base (20) and a connecting base (30) connected to the base; (20) the base (20) has the separating layer (40); and the electric motor (12) is mounted in the heat dissipating room (70), and the driving shaft (16) of the electric motor (12) passes through the separating layer to the mounting room (50).

## Patentansprüche

1. Steuerungssystem für einen Elektroroller, umfassend:
ein Gehäuse (10), umfassend einen Montageraum (50) darin; und
eine Leiterplatte (60),die im Montageraum (50) des Gehäuses (10) aufgenommen ist, und umfassend einen Aussparungsabschnitt (62),
wobei eine Antriebswelle (16) eines elektrischen Motors (12) mindestens einen Abschnitt im Montageraum (50) des Gehäuses (10) aufweist und im Aussparungsabschnitt (62) der Leiterplatte (60) aufgenommen ist und die Leiterplatte (60) elektrisch mit dem elektrischen Motor (12) verbunden ist,
wobei das Gehäuse (10) eine Trennschicht (40) aufweist, um einen Raum im Gehäuse (10) in den Montageraum (50) und einen Wärmeableitungsraum (70) zu unterteilen,
wobei die Leiterplattean die Trennschicht (40) befestigt ist,um die Hitze der Leiterplatte (60) an den Wärmeableitungsraum (70) über die Trennschicht (40) zu übertragen;
wobei das Steuerungssystem **dadurch gekennzeichnet ist, dass** sich der Aussparungsabschnitt (62) der Leiterplatte (60)an einer Kante davon befindet,
wobei das Steuerungssystem weiter **dadurch gekennzeichnet ist, dass**:
der Wärmeableitungsraum (70) mit einem Schmiermittel gefüllt ist; und
die Trennschicht (40) mit einer Vielzahl von Rippen (72) auf einer Seite innerhalb des Wärmeableitungsraums (70) ausgestattet ist.

2. Steuerungssystem nach Anspruch 1, wobeidas Gehäuse (10) eine Basis (20) und eine Verbindungsbasis (30) aufweist,die mit der Basis (20) verbunden ist;die Basis (20) die Trennschicht (40) aufweist; und der elektrische Motor (12) im Wärmeableitungsraum (70) montiert istund der Antriebsschaft (16) des elektrischen Motors (12) durch die Trennschicht zum Montageraum (50) verläuft.

## Revendications

1. Système de commande pour un scooter électrique, comprenant :
un carter (10) ayant une chambre de montage (50) à l'intérieur de celui-ci ; et
une carte de circuits imprimés (60) reçue dans la chambre de montage (50) du carter (10) et ayant une partie évidée (62) ;
un arbre d'entraînement (16) d'un moteur électrique (12) ayant au moins une section dans la chambre de montage (50) du carter (10) et étant reçu dans la partie évidée (62) de la carte de circuits imprimés (60), et la carte de circuits imprimés (60) étant reliée électriquement au moteur électrique (12) ;
le carter (10) ayant une couche de séparation (40) pour diviser un espace dans le carter (10) en la chambre de montage (50) et une chambre de dissipation de chaleur (70) ;
la carte de circuits imprimés étant fixée à la couche de séparation (40) pour transférer la chaleur de la carte de circuits imprimés (60) à la chambre de dissipation de chaleur (70) par l'intermédiaire de la couche de séparation (40) ;
le système de commande étant **caractérisé par le fait que** la partie évidée (62) de la carte de circuits imprimés (60) est située à un bord de celle-ci,
le système de commande étant en outre **caractérisé par le fait que** :
la chambre de dissipation de chaleur (70) est remplie d'un lubrifiant ; et
la couche de séparation (40) comporte une pluralité de nervures (72) sur un côté à l'intérieur de la chambre de dissipation de chaleur (70).

2. Système de commande selon la revendication 1, dans lequel le carter (10) a une base (20) et une base de liaison (30) reliée à la base (20) ; la base (20) a la couche de séparation (40) ; et le moteur électrique (12) est monté dans la chambre de dissipation de chaleur (70), et l'arbre d'entraînement (16) du moteur électrique (12) passe à travers la couche de séparation jusqu'à la chambre de montage (50).
